# EUROPÄISCHE PATENTSCHRIFT

(11) **EP 0 772 390 B1**
(45) Veröffentlichungstag und Bekanntmachung des Hinweises auf die Patenterteilung: **12.08.1998**
(21) Anmeldenummer: 95917974.8
(22) Anmeldetag: 27.04.1995
(51) Int. Cl.: A01J 7/02, A01K 1/12

(54) **SPÜLEINRICHTUNG FÜR KARUSSELLMELKANLAGEN**
RINSING DEVICE FOR REVOLVING MILKING INSTALLATIONS
SYSTEME DE RINCAGE POUR INSTALLATIONS ROTATIVES DE TRAITE

(30) Priorität: 22.07.1994 DE 4426031
(43) Veröffentlichungstag der Anmeldung: 14.05.1997
(73) Patentinhaber: WESTFALIA SEPARATOR AG, 59302 Oelde (DE)
(72) Erfinder: BÜCKER, Heinrich, D-33449 Langenberg (DE); HENSEL, Derk, D-59302 Oelde (DE)
(86) Internationale Anmeldenummer: EP9501601
(87) Internationale Veröffentlichungsnummer: WO9603032

(56) Entgegenhaltungen:
- US-A- 4 145 992

## Beschreibung

Die Erfindung bezieht sich auf eine Spüleinrichtung für Karussellmelkanlagen, deren rotierende Melkplätze jeweils versehen sind mit einem Melkzeug, einer Umschalteinrichtung zur wahlweisen Verbindung der Melkzeuge mit einer Vakuumquelle oder einer Spülleitung und einem Anschlußstück zur zeitweisen Verbindung der Spülleitung innerhalb einer vorbestimmten Spülregion mit einem Kopplungsstück, das mit der ortsfesten Spüleinrichtung in Verbindung steht.

Eine derartige Spüleinrichtung ist beispielsweise bekannt aus der US 4,145,992. Bei dieser Spüleinrichtung ist das Kopplungsstück an einem Hydraulikzylinder vorgesehen, der im zentralen Bereich der Melkanlage schwenkbar angeordnet ist. Diese Anordnung benötig sehr viel Platz und kann bei der Bedienung der Melkanlage hinderlich sein. Die Größe der Spülregion wird dabei begrenzt durch die Dimensionierung des Hydraulikzylinders und die Größe des Schwenkradius.

Der Erfindung liegt die Aufgabe zugrunde, eine Spüleinrichtung für Karussellmelkanlagen zu schaffen, die keinen Platzbedarf innerhalb der Bedienungsebene benötigt und eine beliebig große Spülregion ermöglicht.

Diese Aufgabe wird dadurch gelöst, daß das Kopplungsstück an einem Wagen angeordnet ist, der fahrbar auf einer Fahrschiene vorgesehen ist, deren Krümmungsradius eine kreisförmige Bewegung des Kopplungsstückes bewirkt, die mit der Kreisbahn der Anschlußstücke identisch ist.

Da das Kopplungsstück sich auf derselben Kreisbahn wie das Anschlußstück bewegen muß, verläuft die Fahrschiene unmittelbar am Umfang des Karussellmelkstandes und benötigt daher keinen Platz in der Bedienungsebene. Durch die beliebig wählbare Länge der Fahrschiene ist eine Begrenzung der Spülregion nicht erforderlich.

Bei einer vorteilhaften Ausgestaltung ist die Fahrschiene unterhalb der rotierenden Melkplätze angeordnet. In diesem Bereich kann sie besonders platzsparend und nicht behindernd untergebracht werden.

Bei einer weiteren vorteilhaften Ausgestaltung sind die Anschlußstücke mit mindestens zwei Anschlußstutzen versehen, die in korrespondierende Öffnungen des Kopplungsstückes eingreifen, wobei ein Anschlußstutzen zur Zuführung der Spülmedien dient und über mindestens einen weiteren Anschlußstutzen der Impuls zur Betätigung der Umschalteinrichtung übermittelt wird. Dadurch wird für alle an der Melkanlage vorhandenen Umschalteinrichtungen nur eine einzige Steuereinrichtung benötigt.

Bei einer weiteren vorteilhaften Ausgestaltung sind den Melkplätzen Mitnehmer zugeordnet, die in der Spülregion eine Mitnahme des Kopplungsstückes bewirken und dadurch zunächst die Kopplung von Kopplungsstück und Anschlußstück auslösen, bevor eine Mitnahme des Wagens erfolgt. Für den Kopplungsvorgang und die Fahrt des Wagens sind somit keine speziellen Betätigungsquellen erforderlich.

Durch die Verbindung des Kopplungsstückes mit dem Wagen über ein Parallelogramm-Gelenk wird das Kopplungsstück bei der Mitnahme vertikal aufwärts bewegt und dadurch mit dem Anschlußstück in Kontakt gebracht.

Eine Arretiervorrichtung am Wagen gibt dessen Fahrt erst nach erfolgter Kopplung von Kopplungsstück und Anschlußstück frei.

Die Fahrt des Wagens wird durch einen Anschlag an der Fahrschiene begrenzt. Es folgt aber eine weitere Mitnahme des Kopplungsstückes durch den Mitnehmer bis zur vollständigen Auskopplung von Kopplungsstück und Anschlußstück.

Die Rückführung des Wagens in seine Ausgangsposition nach Auskopplung von Kopplungsstück und Anschlußstück erfolgt durch ein am Wagen befestigtes, über eine Rolle geführtes Seil, an dessen anderem Ende ein Gewicht vorgesehen ist.

Ein Ausführungsbeispiel der Erfindung ist in der Zeichnung dargestellt und wird nachstehend näher erläutert. Es zeigt
- Fig. 1: eine Teil-Draufsicht auf eine Karussellmelkanlage,
- Fig. 2: den Schnitt II - II gemäß Fig. 1,
- Fig. 3: die Ansicht "X" gemäß Fig. 2.

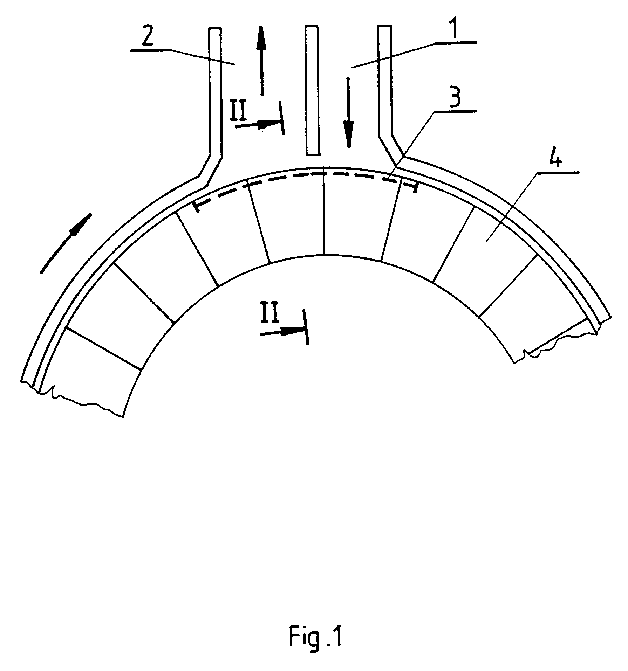

In der Fig. 1 ist ein Teilbereich der Karussellmelkanlage dargestellt, der sich im Bereich des Zuganges 1 und des Ausganges 2 befindet. In diesem Bereich befindet sich auch eine Spülregion 3, die als gestrichelte Linie angedeutet ist.

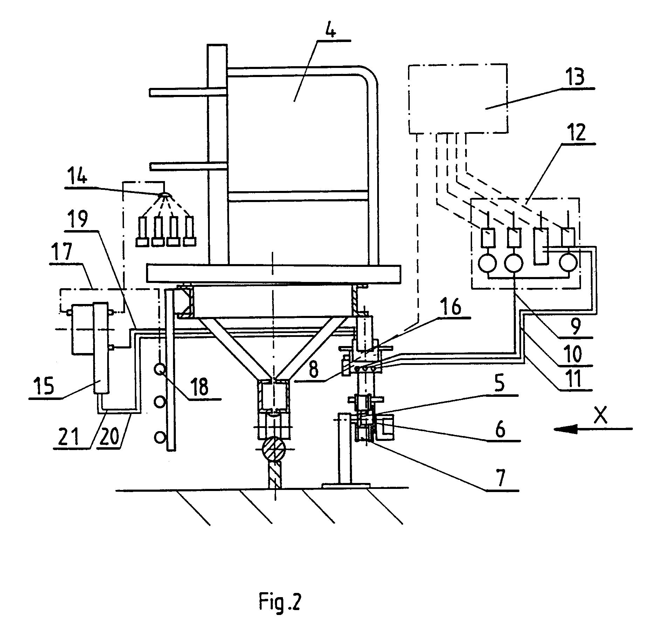

Wie aus der Fig. 2 ersichtlich, ist in der Spülregion 3 unterhalb von Melkplätzen 4 eine Fahrschiene 5 vorgesehen, auf der ein Wagen 6 mittels Rollen 7 fahrbar angeordnet ist. Am Wagen 6 ist ein Kopplungsstück 8 schwenkbar angeordnet, das über eine Spülleitung 9 und Steuerleitungen 10 und 11 mit einer Ventileinheit 12 verbunden ist, die über eine Steuereinheit 13 aktivierbar ist. Jeder Melkplatz 4 ist mit einem Melkzeug 14, einer Umschalteinrichtung 15 und einem Anschlußstück 16 versehen. Die Umschalteinrichtung 15 steht über eine Leitung 17 mit der Milchleitung 18 und über Leitung 19, 20 und 21 mit dem Anschlußstück 16 in Verbindung.

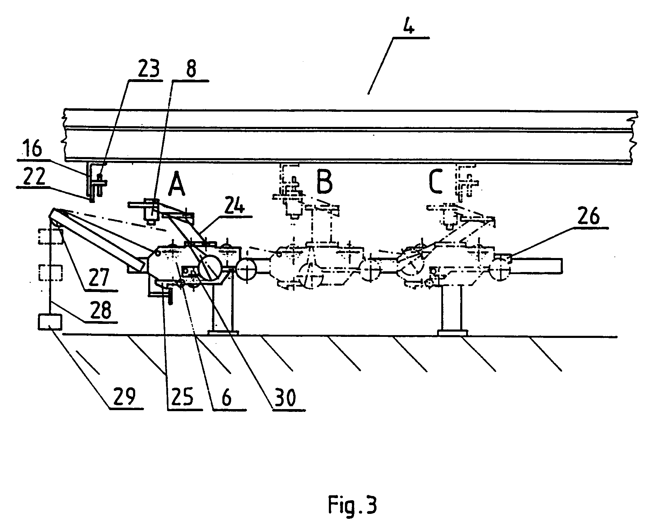

Die Fig. 3 zeigt den Wagen 6 in drei unterschiedlichen Positionen. In der mit "A" bezeichneten Position befindet sich der Wagen 6 in der Ausgangsposition vor Beginn des Spülvorganges. Die Position "B" zeigt den Wagen 6 nach der Kopplung von Kopplungsstück 8 und Anschlußstück 16. In der Position "C" ist der Spülvorgang beendet, und die Auskopplung von Anschlußstück 16 und Kopplungsstück 8 hat bereits stattgefunden. An den Anschlußstücken 16 sind Mitnehmer 22 und Anschlußstutzen 23 festgelegt, die mit den aus der Fig. 2 ersichtlichen Leitungen 19, 20 und 21 verbunden sind. Die Anschlußstutzen 23 korrespondieren mit Öffnungen auf der Oberseite des Kopplungsstückes 8, das über ein Parallelogramm-Gelenk 24 mit dem Wagen 6 verbunden ist. Der Wagen 6 ist mit einer Arretiervorrichtung 25 versehen, die die Fahrt des Wagens 6 erst freigibt, nachdem das Kopplungsstück 8 über das Parallelogramm-Gelenk 24 soweit angehoben wurde, daß die Anschlußstutzen 23 in die Öffnungen des Kopplungsstückes 8 reichen. An der Fahrschiene 5 ist ein Anschlag 26 vorgesehen, der die Fahrt des Wagens 6 begrenzt. Zur Rückführung des Wagens 6 in seine Ausgangsposition "A" dient ein über eine Rolle 27 geführtes Seil 28 und ein daran befestigtes Gewicht 29. Eine Haltevorrichtung 30 verhindert ein vorzeitiges Absenken des Kopplungsstückes 8 in die Position "C".

Wenn ein Melkplatz 4 die Spülregion 3 erreicht, ist das Melkzeug 14 bereits vom Euter des Tieres abgezogen und der Wagen 6 befindet sich in der Ausgangsposition "A". Durch die sich unterhalb der ständig rotierenden Melkplätze 4 befindlichen Mitnehmer 22 wird das Kopplungsstück 8 mitgenommen, während der Wagen 6 noch arretiert ist. Das Parallelogramm-Gelenk 24 bewirkt eine Anhebung des Kopplungsstückes 8 in die Position "B", wodurch die Anschlußstutzen 23 in die Öffnungen des Kopplungsstückes 8 eingreifen und dadurch eine Verbindung herstellen zwischen der Ventileinheit 12 und der Umschalteinrichtung 15. Die Arretierung des Wagens 6 wird jetzt freigegeben, so daß der Wagen 6 und das Kopplungsstück 8 der Bewegung des Melkplatzes 4 folgen. Dabei verhindert die Haltevorrichtung 30 ein vorzeitiges Absenken des Kopplungsstückes 8 in die Position "C". Über die Steuereinheit 13 wird die Umschalteinrichtung 15 betätigt und dadurch das Melkzeug 14 über die Leitung 19, das Anschlußstück 16, das Kopplungsstück 8 und die Leitung 9 mit der Ventileinheit 12 verbunden. Anschließend läuft das in der Steuereinheit 13 programmierte Spülverfahren durch Betätigung der Ventileinheit 12 ab. Der Spülvorgang ist abgeschlossen, bevor die Fahrt des Wagens 6 durch den Anschlag 26 beendet wird. Das Kopplungsstück 8 wird durch den Mitnehmer 22 weitergeführt und durch das Parallelogramm-Gelenk 24 in die Position "C" abgesenkt, wodurch eine Auskopplung von Kopplungsstück 8 und Anschlußstück 16 erfolgt. Das Gewicht 29 zieht jetzt den Wagen 6 über das Seil 28 in seine Ausgangsposition "A" zurück, aus der er durch den folgenden Melkplatz 4 in vorbeschriebener Weise wieder mitgenommen wird.

## Patentansprüche

1. Spüleinrichtung für Karussellmelkanlagen, deren rotierende Melkplätze (4) jeweils versehen sind mit einem Melkzeug (14), einer Umschalteinrichtung (15) zur wahlweisen Verbindung der Melkzeuge (14) mit einer Vakuumquelle oder einer Spülleitung und einem Anschlußstück zur zeitweisen Verbindung der Spülleitung innerhalb einer vorbestimmten Spülregion mit einem Kopplungsstück (8), das mit der ortsfesten Spüleinrichtung in Verbindung steht, **dadurch gekennzeichnet**, daß das Kopplungsstück (8) an einem Wagen (6) angeordnet ist, der fahrbar auf einer Fahrschiene (5) vorgesehen ist, deren Krümmungsradius eine kreisförmige Bewegung des Kopplungsstückes (8) bewirkt, die mit der Kreisbahn der Anschlußstücke (16) identisch ist.

2. Spüleinrichtung nach Anspruch 1, dadurch gekennzeichnet, daß die Fahrschiene (5) unterhalb der rotierenden Melkplätze (4) angeordnet ist.

3. Spüleinrichtung nach Anspruch 1 oder 2, dadurch gekennzeichnet, daß die Anschlußstücke (16) mit mindestens zwei Anschlußstutzen (23) versehen sind, die in korrespondierende Öffnungen des Kopplungsstückes (8) eingreifen, wobei ein Anschlußstutzen zur Zuführung der Spülmedien dient und über mindestens einen weiteren Anschlußstutzen (23) der Impuls zur Betätigung der Umshalteinrichtung (15) übermittelt wird.

4. Spüleinrichtung nach einem der Ansprüche 1 bis 3, dadurch gekennzeichnet, daß an den Melkplätzen (4) Mitnehmer (22) zugeordnet sind, die in der Spülregion (3) eine Mitnahme des Kopplungsstückes (8) bewirken und dadurch zunächst die Kopplung von Kopplungsstück (8) und Anschlußstück (16) auslösen, bevor eine Mitnahme des Wagens (6) erfolgt.

5. Spüleinrichtung nach einem der Ansprüche 1 bis 4, dadurch gekennzeichnet, daß das Kopplungsstück (8) über eine Parallelogramm-Gelenk (24) mit dem Wagen (6) verbunden ist.

6. Spüleinrichtung nach einem der Ansprüche 1 bis 5, dadurch gekennzeichnet, daß der Wagen (6) mit einer Arretiervorrichtung (25) versehen ist, die die Fahrt des Wagens (6) erst nach erfolgter Kopplung von Kopplungsstück (8) und Anschlußstück (16) freigibt.

7. Spüleinrichtung nach einem der Ansprüche 1 bis 6, dadurch gekennzeichnet, daß die Fahrschiene (5) mit einem Anschlag (26) versehen ist, der die Fahrt des Wagens (6) begrenzt.

8. Spüleinrichtung nach einem der Ansprüche 1 bis 7, dadurch gekennzeichnet, daß am Wagen (6) ein über eine Rolle (27) geführtes Seil (28) befestigt ist, an dessen anderem Ende ein Gewicht (29) vorgesehen ist, das nach erfolgter Auskopplung von Kopplungsstück (8) und Anschlußstück (16) eine Rückholung des Wagens (6) bewirkt.

## Claims

1. Rinsing device for rotary milking parlours whose rotating milking places (4) are each provided with a milking cluster (14), a switch-over device (15) for optional connection of the milking clusters (14) to a vacuum source or a rinsing line and a connection piece for periodic connection of the rinsing line within a preselected rinsing region to a coupling piece (8) which is connected to the stationary rinsing device, **characterised in that** the coupling piece (8) is attached to a cart (6) which is situated in a mobile arrangement on a rail (5) whose radius of curvature effects a circular movement of the coupling piece (8) that is identical to the orbit of the connection pieces (16).

2. Rinsing device according to claim 1, characterised in that the rail (5) is arranged beneath the rotating milking places (4).

3. Rinsing device according to claim 1 or 2, characterised in that the connection pieces (16) are provided with at least two connectors (23) which register in corresponding openings of the coupling piece (8), whereby one connector serves to feed the rinsing media, and the pulse to actuate the switch-over device (15) is transmitted via at least one further connector (23).

4. Rinsing device according to one of the claims 1 to 3, characterised in that drivers (22) are arranged at the milking places (4) which effect driving of the coupling piece (8) in the rinsing region (3) and by this means trigger the coupling of coupling piece (8) and connection piece (16) before pulling of the cart (6) takes place.

5. Rinsing device according to one of the claims 1 to 4, characterised in that the coupling piece (8) is connected to the cart (6) by means of a parallelogram joint (24).

6. Rinsing device according to one of the claims 1 to 5, characterised in that the cart (6) is provided with an arresting device (25) which only releases the cart to travel once the coupling piece (8) and connection piece (16) are coupled.

7. Rinsing device according to one of the claims 1 to 6, characterised in that the rail (5) is provided with a stop (26) which limits the travel of the cart (6).

8. Rinsing device according to one of the claims 1 to 7, characterised in that a rope (28) led over a roller (27) is fixed to the cart (6), the other end of the rope (28) being provided with a weight (29) which brings back the cart (6) after decoupling of coupling piece (8) and connection piece (16).

## Revendications

1. Dispositif de lavage pour manèges de traite dans lesquels chacun des postes de traite en rotation (4) est équipé d'un faisceau trayeur (14), d'un dispositif de commutation (15) assurant la liaison alternative des faisceaux trayeurs (14) soit avec une source de vide soit avec une conduite de lavage, et d'une pièce de raccordement assurant la liaison temporaire de la conduite de lavage dans une zone déterminée faisant l'objet du lavage, avec une pièce de couplage (8), solidaire d'une station de lavage immobile, **caractérisé en ce que** la pièce de couplage (8) est disposée sur un chariot (6) installé de façon mobile sur un rail (5) dont le rayon de courbure permet un mouvement circulaire de la pièce de couplage (8), identique du circuit parcouru par les pièces de raccordement (16).

2. Dispositif de lavage selon revendication 1, caractérisé en ce que le rail (5) est disposé en-dessous des postes de traite en rotation (4).

3. Dispositif de lavage selon l'une des revendications 1 ou 2, caractérisé en ce que les pièces de raccordement (16) sont munies chacune d'au moins deux embouts de raccordement (23) prenant dans des ouvertures correspondantes de la pièce de couplage (8), l'un de ces embouts servant d'alimentation des milieux de lavage et au moins l'un des autres embouts ((23) assurant la transmission de l'impulsion pour l'actionnement du dispositif de commutation (15).

4. Dispositif de lavage selon l'une des revendications 1 à 3, caractérisé en ce que, au niveau des postes de traite (4), il sont disposés des entraîneurs (22) qui, dans la zone faisant l'objet du lavage (3), provoquent l'entraînement de la pièce de couplage (8) et, ainsi, lancent d'abord le raccordement entre la pièce de couplage (8) et la pièce de raccordement (16), avant que l'entraînement du chariot (6) est réalisé.

5. Dispositif de lavage selon l'une des revendications 1 à 4, caractérisé en ce que la pièce de couplage (8) est reliée au chariot (6) par l'intermédiaire d'une articulation en parallélogramme (24).

6. Dispositif de lavage selon l'une des revendications 1 à 5, caractérisé en ce que le chariot (6) est muni d'un dispositif d'arrêt (25), ne libérant la course du chariot (6) qu'après le raccordement de la pièce de couplage (8) à la pièce de raccordement (16).

7. Dispositif de lavage selon l'une des revendications 1 à 6, caractérisé en ce que le rail (5) est muni d'un élément de butée (26) limitant la course du chariot (6).

8. Dispositif de lavage selon l'une des revendications 1 à 7, caractérisé en ce qu'un câble (28) guidé sur un galet (27) est fixé au chariot (6), au bout dudit câble il est prévu un poids (29) qui, une fois la pièce de couplage (8) découplée de la pièce de raccordement (16), provoque le retour du chariot (6).
